**Europäisches Patentamt**

**European Patent Office**

**Office européen des brevets**

(19)

(11) Publication number: **0 085 525**
**B1**

(12) # EUROPEAN PATENT SPECIFICATION

(45) Date of publication of patent specification: **01.06.88**

(51) Int. Cl.⁴: **C 09 K 5/04, F 25 B 29/00**

(21) Application number: **83300357.7**

(22) Date of filing: **25.01.83**

(54) A process of adsorption.

(30) Priority: **29.01.82 GB 8202608**

(43) Date of publication of application:
**10.08.83 Bulletin 83/32**

(45) Publication of the grant of the patent:
**01.06.88 Bulletin 88/22**

(84) Designated Contracting States:
**DE FR GB IT NL SE**

(56) References cited:
**GB-A- 266 683**
**GB-A-2 088 548**
**US-A-2 496 459**
**US-A-4 138 861**

(73) Proprietor: **Exxon Research and Engineering Company**
**P.O.Box 390 180 Park Avenue**
**Florham Park New Jersey 07932 (US)**

(72) Inventor: **Moss, Gerald**
**Trevose Sarajac Avenue East Challow**
**Wantage Oxfordshire (GB)**

(74) Representative: **Somers, Harold Arnold et al**
**ESSO Engineering (Europe) Ltd.**
**Patents & Licences**
**Apex Tower High Street**
**New Malden Surrey KT3 4DJ (GB)**

Courier Press, Leamington Spa, England.

# 0 085 525

**Description**

This invention relates to a process of adsorption wherein an adsorbate vapour is adsorbed by an adsorbent.

It has been found that in absorption processes where methanol vapour is used as absorbate and aqueous zinc bromide is used as absorbent, after a time the zinc bromide will decompose the methanol by extracting water thereby converting it to dimethyl ether. It has been conjectured by the inventor that there is a strong possibility that the same type of decomposition will occur if the vapour of the azeotrope of n-propanol and water is adsorbed by a zeolite molecular sieve.

According to this invention such difficulties are overcome by the use of an adsorption process wherein an adsorbate comprising the vapour of a homogeneous or a heterogeneous azeotrope of water and a liquid organic compound, said azeotrope having a positive deviation from Raoult's Law, is contacted with, and adsorbed by, an adsorbent comprising, in sequence, a first layer of material which preferentially adsorbs the vapour of the organic compound without substantial dehydration thereof, and a second layer of material which preferentially adsorbs water vapour, and wherein heat of adsorption is evolved.

When using this process most of the water will be adsorbed by the layer of material preferentially adsorbing water although some of the water will be retained by the outer layer. In this manner the organic compound will be prevented from being adsorbed by the layer of material which preferentially adsorbs water provided sufficient of the material preferentially adsorbing organic compound is present and any tendency towards decomposition will be avoided.

Various liquid organic compounds can be used as the component of the azeotrope provided the azeotrope has a positive deviation from Raoult's Law, i.e. it displays a minimum boiling point relative to the surrounding mixture compositions. Although homogeneous binary azeotropes are preferred it is possible to use a heterogeneous binary azeotrope. Azeotropes of water and a liquid organic compound having a relatively high minimum boiling point, e.g. above 70°C at 760 mm Hg, and a relatively high content of water, e.g. above 40 mole % are preferred.

Thus the organic compound can be certain alcohols, e.g. those having 3 to 6 carbon atoms per molecule, ethers, carboxylic acids, ketones or hydrocarbons for example. The suitable water-containing azeotropes in approximate increasing order of preference are:

| Heterogeneous azeotropes | | |
|---|---|---|
| Second component | Mole % of second component | Minimum b.p. Temp°C (760 mm Hg) |
| Ethyl ether | 95.00 | 34.2 |
| Ethyl acetate | 76.00 | 70.4 |
| Benzene | 70.40 | 69.3 |
| Toluene | 44.40 | 84.1 |
| Tert-amyl alcohol | 35.00 | 87.0 |
| n-Butyl alcohol | 25.00 | 92.3 |
| iso-Amyl alcohol | 17.21 | 95.2 |
| Homogeneous azeotropes | | |
| Ethanol | 89.43 | 78.2 |
| Isopropyl alcohol | 68.54 | 80.4 |
| Methyl ethyl ketone | 67.00 | 73.5 |
| Tert-butyl alcohol | 64.59 | 79.9 |
| Allyl alcohol | 45.50 | 88.2 |
| n-Propyl alcohol | 43.17 | 87.7 |
| sec Butyl alcohol | 34.00 | 88.5 |
| iso-Butyl alcohol | 32.86 | 89.9 |

2

| Second component | Mole % of second component | Minimum b.p. temp°C (760 mm Hg) |
|---|---|---|
| iso-Butyric acid | 5.50 | 99.3 |
| Propionic acid | 5.30 | 100.0 |

An adsorption process using an azeotrope of water and n-propanol is described and claimed in our U.K. patent application 8115312 (published as GB—A—2098623). The azeotrope has about 28 to 32 weight percent of water according to the temperature.

The material which preferentially adsorbs water, hereinafter referred to as material A, can be a zeolite molecular sieve, silica gel or a salt capable of hydration such as sodium sulphate, copper sulphate, lithium nitrate, magnesium chloride, magnesium nitrate or calcium chloride. The preferred material is an A or Y type zeolite molecular sieve.

The material which preferentially adsorbs organic compounds without substantial dehydration, hereinafter referred to as material B, can be for example activated charcoal. It could also be silica gel or an A or Y-type zeolite molecular sieve. It is to be understood that materials A and B must be different substances so that silica gel for example cannot be used for both layers.

Usually both materials A and B will be used in powder or particulate form. It is essential that when the azeotrope contacts the two layers of materials A and B, it first contacts the layer of material B (i.e. layer B is superimposed on layer A if the contacting is from above).

When the adsorbate is adsorbed by the adsorbent, heat of adsorption will be evolved and this heat can be transferred elsewhere, for example to another part of a heat pump or for delivery to the load. This transfer is usually carried out by heat exchange, by the use for example of a heat exchanger, the coils of which are housed inside the adsorber and which are surrounded by adsorbent.

After adsorption the azeotrope will have to be desorbed from the adsorbent if the process is to be cyclic. This is usually achieved by insertion of a heat exchanger in the adsorbent housed in the adsorber. Alternatively an electrical resistive heater can be located in the adsorbent housed in the adsorber.

The azeotrope of n-propanol and water has a rather large positive deviation from Raoult's Law and this means that after the n-propanol has been removed by passage through material B the water will be subject to the full pressure of the system i.e. at a pressure higher than the partial pressure it would otherwise display. This means that the heat pump will work at high efficiency and in fact it should be possible to pump heat from −5°C to 70°C at a coefficient of performance (C.O.P) approaching 1.5.

Very often systems employing an adsorber also make use of a heat of fusion heat store. In such systems the adsorbate vapour which is desorbed from the adsorber is usually condensed in the heat of fusion heat store. In such heat stores there are a plurality of receptacles housing a substance with a relatively low melting point and a relatively high heat of fusion, for example stearic acid. The heat of condensation of the adsorbate as it condenses in the heat of fusion heat store is transmitted to this relatively low melting substance which then melts. In this way heat is stored in this substance housed in the receptacles. When heat is abstracted from this heat store the substance freezes, evolving latent heat of fusion.

It is possible by the use of the process of this invention to operate an alternative heat of fusion heat store at low temperatures, i.e. below 0°C, and water can be used as the substance of relatively high heat of fusion which is of course very cheap. Alternatively phenol could be used as this high heat of fusion substance.

Processes and systems involving the adsorption of an adsorbate by an adsorbent and where an n-propanol-azeotrope can be used as the adsorbate include those claimed in our prior U.K. patent applications 8038283, 8039157 and 8111392, published as GB—A—2088546, GB—A—2091411 and GB—A—2088548 respectively.

U.K. Application 8038283 (GB—A—2088546) claims a heating system wherein solar energy is used to supply heat to a heat of fusion heat store, adsorbate is stripped from adsorbent in an adsorber and thereafter condensed, the heat of condensation being delivered to the load, condensed adsorbate is sent to an evaporator, adsorbate is vaporised in the evaporator and vaporised adsorbate is adsorbed in the adsorber, the heat of adsorption being delivered to the load.

U.K. Application 8039157 (GB—A—2091411) claims a combined adsorption and absorption process in which an external source of heat is used to desorb adsorbate from adsorbent housed in an adsorber. The adsorbate vapour is condensed and the latent heat of condensation used to remove absorbate from the working fluid in the generator of an absorption system.

U.K. Application 8111392 (GB—A—2088548) claims a method of obtaining heat wherein adsorbate is evaporated from an evaporator and thereafter adsorbed by an adsorbent in an adsorber, the latent heat of adsorption providing heat to the load and thereafter the adsorbate is desorbed from the adsorbent and

3

desorbed adsorbate condensed in a heat of fusion heat store and the substance housed therein melting and thereafter solidifying, the latent heat of fusion providing heat to the load.

Example

An adsorber was provided with a series of trays, each tray containing as adsorbent a bottom layer of powdered Y-type molecular sieve and an upper layer of activated charcoal.

Vaporised azeotrope of n-propanol and water was passed over the trays in the adsorber where it was adsorbed and it was found that the Y-type molecular sieve preferentially adsorbed nearly all the water component of the azeotrope whilst the activated charcoal adsorbed substantially all of the n-propanol component of the azeotrope.

Heat of adsorption was evolved and this was transferred to a domestic hot water system by means of a heat exchanger through which heat transfer fluid circulated and the coils of which passed through the adsorbent in the adsorber.

The system used was cyclic and when adsorption was complete the azeotrope was desorbed by means of heat supplied to the adsorbent from the coils of a resistive heater. The desorbed azeotrope was allowed to condense in a condenser giving up its heat of condensation.

Thereafter the condensed azeotrope was evaporated by heat exchange and the vaporised azeotrope once more passed to the adsorber where it was adsorbed giving off heat of adsorption.

## Claims

1. A process of adsorption wherein an adsorbate comprising the vapour of a homogeneous or a heterogeneous azeotrope of water and a liquid organic compound, said azeotrope having a positive deviation from Raoult's Law, is contacted with, and adsorbed by, an adsorbent comprising, in sequence, a first layer of material which preferentially adsorbs the vapour of the organic compound without substantial dehydration thereof, and a second layer of material which preferentially adsorbs water vapour, and wherein heat of adsorption is evolved.

2. A process according to claim 1 wherein the azeotrope is a homogeneous binary azeotrope.

3. A process according to either of claims 1 and 2 wherein the azeotrope has more than 40 mole % water and a minimum boiling point of above 70°C at 760 mm Hg.

4. A process according to claim 3 wherein the azeotrope is an azeotrope of water and n-propanol.

5. A process according to any one of claims 1 to 4 wherein the material which preferentially adsorbs water is an A or Y-type zeolite molecular sieve.

6. A process according to any one of claims 1 to 5 wherein the material which preferentially adsorbs organic compounds without substantial dehydration is activated charcoal.

7. A process according to any one of claims 1 to 6 which is cyclic and wherein after adsorption the azeotrope is desorbed from the adsorbent.

8. A process according to any one of claims 1 to 7 wherein after adsorption, adsorbate vapour is desorbed from the adsorbent and condensed in a heat of fusion heat store.

## Patentansprüche

1. Adsorptionsverfahren, dadurch gekennzeichnet, daß ein Adsorbat, das den Dampf eines homogenen oder heterogenen Azeotrops aus Wasser und einer flüssigen organischen Verbindung enthält, wobei das Azeotrop eine positive Abweichung vom Raoult'schen Gesetz aufweist, mit einem Adsorbens kontaktiert wird und von diesem adsorbiert wird, welches aufeinanderfolgend eine erste Materialschicht, die vorzugsweise den Dampf der organischen Verbindung ohne wesentliche Dehydratisierung adsorbiert, und eine zweite Materialschicht aufweist, die vorzugsweise Wasserdampf adsorbiert, und daß sich Adsorptionswärme entwickelt.

2. Verfahren nach Anspruch 1, dadurch gekennzeichnet, daß das Azeotrop ein homogenes binäres Azeotrop ist.

3. Verfahren nach Anspruch 1 oder 2, dadurch gekennzeichnet, daß das Azeotrop mehr als 40 Mol% Wasser und einen Mindestsiedepunkt von über 70°C bei 760 mm Hg aufweist.

4. Verfahren nach Anspruch 3, dadurch gekennzeichnet, daß das Azeotrop ein Azeotrop aus Wasser und n-Propanol ist.

5. Verfahren nach einem der Ansprüche 1 bis 4, dadurch gekennzeichnet, daß das Material, welches vorzugsweise Wasser adsorbiert, ein A- oder Y-Typ Zeolithmolekularsieb ist.

6. Verfahren nach einem der Ansprüche 1 bis 5, dadurch gekennzeichnet, daß das Material, welches vorzugsweise organische Verbindungen ohne wesentliche Dehydratisierung adsorbiert, Aktivkohle ist.

7. Verfahren nach einem der Ansprüche 1 bis 6, dadurch gekennzeichnet, daß es cyclisch ist und daß nach der Adsorption das Azeotrop aus dem Adsorbens desorbiert wird.

8. Verfahren nach einem der Ansprüche 1 bis 7, dadurch gekennzeichnet, daß nach der Adsorption Adsorbatdampf aus dem Adsorbens desorbiert wird und in einem Schmelzwärmespeicher kondensiert wird.

# 0 085 525

**Revendications**

1. Procédé d'adsorption, dans lequel un adsorbat comprenant la vapeur d'un azéotrope homogène ou hétérogène de l'eau et d'un composé organique liquide, ledit azéotrope présentant un écart positif par rapport à la loi de Raoult, est mis en contact avec, et adsorbé par, un adsorbant comprenant, dans l'ordre, une première couche de matière qui adsorbe préférentiellement la vapeur du composé organique sans le déshydrater substantiellement, et une deuxième couche de matière qui absorbe préférentiellement la vapeur d'eau, et dans laquelle est libérée la chaleur d'adsorption.

2. Procédé selon la revendication 1, dans lequel l'azéotrope est un azéotrope binaire homogène.

3. Procédé selon l'une quelconque des revendications 1 et 2, dans lequel l'azéotrope possède plus de 40% en moles d'eau et a un point d'ébullition minimum supérieur à 70°C à 760 mm de Hg.

4. Procédé selon la revendication 3, dans lequel l'azéotrope est un azéotrope d'eau et de n-propanol.

5. Procédé selon l'une quelconque des revendications 1 à 4, dans lequel le matériau qui adsorbe préférentiellement l'eau est un tamis moléculaire de type zéolite A ou Y.

6. Procédé selon l'une quelconque des revendications 1 à 5, dans lequel le matériau qui adsorbe préférentiellement les composés organiques sans les déshydrater substantiellement est du charbon actif.

7. Procédé selon l'une quelconque des revendications 1 à 6, qui est cyclique et dans lequel, après l'adsorption, l'azéotrope est désorbé de l'adsorbant.

8. Procédé selon l'une quelconque des revendications 1 à 7, dans lequel, après l'adsorption, la vapeur d'adsorbat est désorbée de l'adsorbant et condensée dans un réservoir de chaleur à chaleur de fusion.

5